# EUROPÄISCHE PATENTANMELDUNG

(11) **EP 3 120 996 A1**
(43) Veröffentlichungstag der Anmeldung: **25.01.2017**
(21) Anmeldenummer: 16000353.9
(22) Anmeldetag: 12.02.2016
(51) Int. Cl.: B30B 15/14, B30B 1/26, F03G 3/08, F03G 7/08

(54) **AUF MECHANISCHEN PRESSEN ANWENDBARES SYSTEM FÜR DIE NUTBARMACHUNG DER KINETISCHEN ENERGIE DER MASSEN IN BEWEGUNG**

(30) Priorität: 20.02.2015 CH 2252015
(71) Anmelder: Farina Presse Srl, 23867 Suello (LC) (IT)
(72) Erfinder: Formenti, Sergio, I - 22031 Albavilla (LC) (IT)

(57) **Zusammenfassung**

Das System zur Nutzbarmachung der kinetischen Energie der Massen in Bewegung kann auf mechanischen Pressen mit kinematischer Kette von hoher Trägheit und die eine Kupplung (03) und eine Bremse (05) besitzen, eingebaut werden.

Das System verwandelt die kinetische Energie der Massen in Bewegung bei jedem Prellschlag der Presse in elektrische Energie..

Das System zur Nutzbarmachung der kinetischen Eenrgie besteht aus Stromerzeugermotoren (15), die auf der Bremsseite (05) befestigt sind und mit der Exzenterwelle (07) und folglich mit der gesamten kinematischen Kette verbunden sind.

Eine elektrische Ausrüstung (11) dämpft mittels eines bidirektionalen Versorgungssystems Extremwerte durch ihr Speichersystem, indem es elektrischen Strom an den Hauptmotor (01) abgibt und den Energieüberschuss ins Netz eingibt.

## Beschreibung

### Technisches Gebiet

Die Erfindung betrifft ein System zur Nutzbarmachung von kinetischer Energie von Massen in Bewegung, das auf mechanische Pressen für das Schmieden von Metall und für Blechverformung montiert wird und eine kinetische Kette von hoher Trägheit, eine Kupplung und eine Bremse besitzt.

### Stand der Technik

Bei mechanischen Pressen für das Schmieden von Metallen und für die Verformung von Blechen ist die lineare Bewegung des Stößels mit festem Hub von der Drehung einer Exzenterwelle in einer kinematischen Kette gegeben, die aus einer oder mehreren Pleuelstangen besteht oder eine Kulissenkinematik besitzt.
Um die Teile während der Bearbeitung zu bewegen, muss die Stößelbewegung bei jedem Schlag auf dem "Oberen Toten Punkt" unterbrochen werden, und auf diese Weise werden die Massen der kinematischen Kette mittels einer Kupplung beschleunigt, die eine erhebliche Menge Energie aufnimmt und in Hitze verwandelt. Dieselben Massen in Bewegung werden dann von einer Bremse angehalten, die die weitere kinetische Energie in Hitze verwandelt. Das bringt mit sich, dass die Kupplung mit Blasluft belüftet und die Bremse wassergekühlt werden muss.
Bei schnellen und großen Pressen kommt die bei jedem Prellschlag in Hitze dissipierte Energie der beim Schmieden des Teiles abgegebenen Hitze gleich, und demnach ist der Energieertrag nicht höher als 50% der insgesamt einsetzten Energie. Dieses Phänomen stellt eine Beschränkung für den Betriebsrhythmus der Presse und den gesamten Produktionszyklus dar.

### Quellennachweis

| Patent-Nr. | Erfinder | Datum der Veröffentlichung | Patentnehmer |
|---|---|---|---|
| DE4421527A1 | Sauerbrey Horst | 1995-12-21 | LANGENSTEIN &SCHEMANN |
| EP1930149A1 | Mergner Stephan | 2008-06-11 | BURKHARDT - GmbH MASCHINENFABRIK |
| DE102012217629A1 | Tado Masashi | 2013-03-28 | SUMITOMO H.I. |

### Darstellung der Erfindung

Zweck der Erfindung ist die Herstellung eines mechanisch-elektrischen Systems, das dazu in der Lage ist, einen Großteil der kinetischen Energie der Massen in Bewegung, die bei jedem Prellschlag erzeugt wird, nutzbar zu machen.
Dieses System kann auf allen mechanischen Pressen, die mit einer Kupplung und einer Bremse ausgerüstet sind, angewendet werden und es verwandelt die zurückgewonnene Energie in elektrische Energie, die den Hauptmotor speist und der Energieüberschuss wird in das Netz gespeist.
Das System zur Nutzbarmachung der kinetischen Energie besteht aus einem oder mehreren Stromerzeugermotoren, die mittels einer neuen Struktur an der Bremsseite befestigt und mit der Exzenterwelle und folglich mit der gesamten kinetischen Kette verbunden sind. Darüber hinaus muss der Hauptmotor, der vom Stromnetz gespeist wird, dazu geeignet sein, die von den Stromerzeugermotoren nutzbar gemachte Energie aufzunehmen. Abschließend muss die elektrische Ausrüstung die Stromerzeugermotoren und den Hauptmotor der Presse über ein bidirektionales Speisesystem und aus einer intelligenten polyvalenten Schnittstelle führen, die dazu in der Lage ist, sich am Netz zu speisen, den von den Stromerzeugermotoren gelieferten Strom an den Hauptmotor zu verteilen, und den Stromüberschuss nach Dämpfung der Extremwerte mit einem eigenen Speichersystem in das Stromnetz zu geben.

Im Vergleich zu Patent DE4421527A1 werden die technischen und Sicherheitsmerkmale nicht verändert; die Bremse der Presse garantiert nämlich das Anhalten des Stößels am OT in ihrer Funktion als Feststellbremse und im Falle von Funktionsstörung tritt sie als Sicherheisbremse ein.

Die Vorteile der Erfindung sind:
- Bemerkenswerte Menge nutzbar gemachter und in elektrische Energie umgewandelter kinetischer Energie.
- Geringerer Gesamtverbrauch an elektrischer Energie.
- Bessere energetische Leistung der Presse.
- Dank der Reduzierung der von Kupplung und Bremse erzeugten Hitze geringerer Verschleiß.
- Reduzierung der Stillstandzeiten der Maschine und der Wartungskosten.
- Potentielle Erhöhung des Arbeitsrhythmus und folglich der Produktionsleistung.

### Liste der Zeichnungen

### Zeichnung Nr. 1

Sie zeigt eine mechanische Presse mit dem System für die Nutzbarmachung der kinetischen Energie der Massen in Bewegung im Schnitt.
01. Hauptmotor
02. Schwungrad
03. Kupplung
04. Kupplungsreibscheibe
05. Bremse
06. Bremsreibscheibe
07. Exzenterwelle
08. Kulisse
09. Stößel
10. Oberer Gesenkhalter
11. Elektrische Ausrüstung
12. Halteflansch
13. Zahnkranz
14. Zahnritzel
15. Stromerzeugermotoren

### Zeichnung Nr. 2

Sie zeigt den Betriebsablauf beim Prellschlag der Presse mit dem System für die Nutzbarmachung der kinetischen Energie der Massen in Bewegung.

### Ausführung der Erfindung

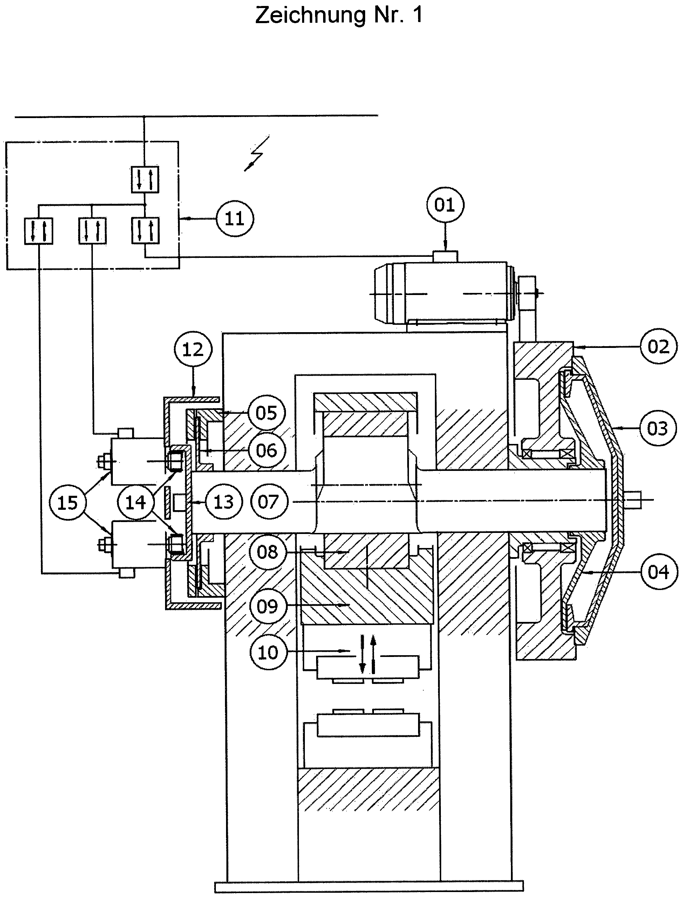

Die beschriebene mechanische Presse sieht ein System zur Nutzbarmachung der kinetischen Energie der Massen in Bewegung vor, das aus einem Hauptmotor (01) besteht, der mit Wechselstrom im Hochleistungsbetrieb gespeist wird, wie in Zeichnung Nr. 1 abgebildet.

Aufgabe des Hauptmotors ist es, das Schwungrad (02) mit der Kupplungsgruppe (03) zum Drehen zu bringen, die bei einer Betriebsgeschwindigkeit dazu in der Lage ist, eine beträchtliche Menge Energie anzusammeln, die die für die Bearbeitung des Teils in der Presse erforderliche weit übersteigt.

Vorgesehen sind zwei Stromerzeugermotoren (15), die synchron zu Hochleistungs-Dauermagneten sind und durch eine hohe Zahl von Polen gekennzeichnet sind für den Einsatz bei niedriger Drehgeschwindigkeit und mittels Kühlkreis gekühlt sind.

Die Verankerung dieser Motoren ist an der Bremsseite (05) vorgesehen mittels eines neuen Halteflansches (12), der direkt an dem festen Teil der Bremse (05) befestigt wird. Auf den Wellen der Stromerzeugermotoren (15) sitzen Zahnritzel (14), die ihrerseits auf einen Zahnkranz (13) eingreifen, der mit der Exzenterwelle (07) einteilig verbunden ist. Diese Stromerzeugermotoren (15) haben die Aufgabe, den Drehmoment zu speisen, der die gesamte kinetische Kette beschleunigt und abbremst, die aus der Exzenterwelle (07), der Kupplungsreibscheibe (04), der Bremsreibscheibe (06), der Kulisse (08), dem Stößel (09) und dem oberen Werkzeughalter (10) mit den entsprechenden Werkzeugen besteht.

Die elektrische Ausrüstung (11), die die Stromerzeugermotoren (15) und den Hauptmotor (01) der Presse führt, besteht aus einem System bidirektionaler Stromversorgung mit Hochleistungsbetätigungen, das dazu in der Lage ist, die Parameter des Stromflusses, des erzeugten Drehmoments und der Frequenz für die Geschwindigkeitsänderung zu führen.

Daher ist ihre Aufgabe:
- dem Netz Strom zu entnehmen, um den Hauptmotor (01) beim Anlassen der Presse zu versorgen..
- den vom Hauptmotor (01) während der Drosselungs- und Abschaltphase der Presse erzeugten elektrischen Strom ins Netz rückzuspeisen.
- elektrischen Strom aus dem Netz aufzunehmen, um die Stromerzeugermotoren (15) während des Prellschlags zu speisen.
- den während der Nutzbarmachungsphase der kinetischen Energie von den Stromerzeugermotoren (15) erzeugten Strom an den Hauptmotor (01) zu übertragen.
- einen Teil des von den Stromerzeugermotoren (15) gelieferten elektrischen Stromüberschusses zu speichern, bevor der vom gesamten System nicht verbrauchte elektrische Strom wieder ins Netz abgegeben wird, und so Stromextremwerte zu beschränken..

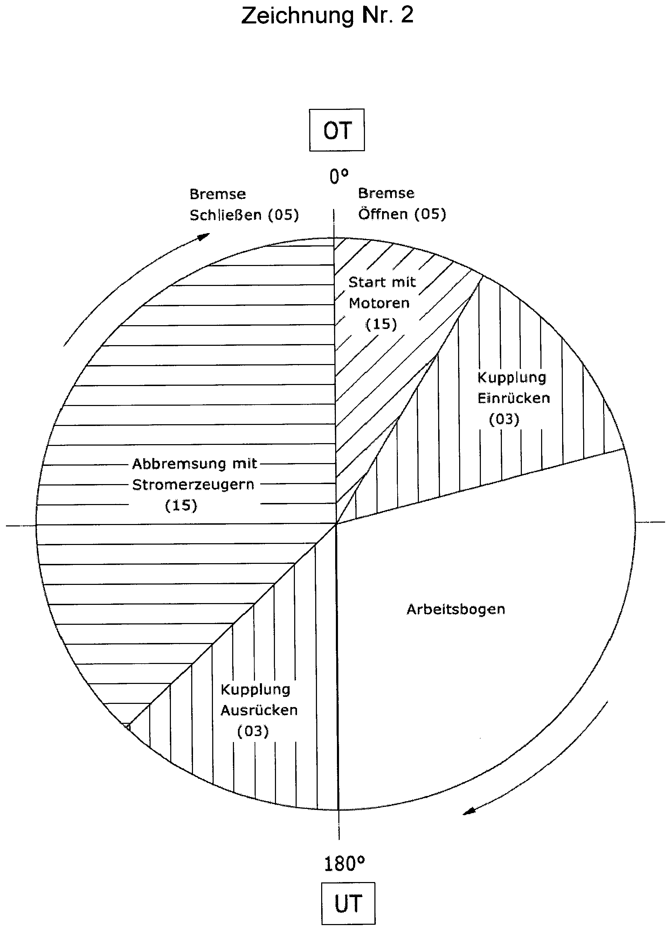

Die Phasen des Prellschlags mit dem System der Nutzbarmachung der kinetischen Energie der Massen in Bewegung sind in der Zeichnung Nr. 2 gezeigt.

Der Start erfolgt bei Öffnen der Bremse /05) und Antrieb der Stromerzeugermotoren (15), die die gesamte kinematische Kette für die Dauer eines ersten Drehbogens vor dem Einrücken der Kupplung (03) beschleunigen und so die dissipierte Energie in Hitze umformen. Mit dem Einrücken der Kupplung (03) verbindet sich die Übertragung des Schwungrads (02) einteilig mit der kinematischen Kette für den gesamten Arbeitsablauf und verleiht so die für die Bearbeitung der in der Presse befindlichen Teile erforderliche Energie. Während des Arbeitsablaufs sorgt die elektrische Ausrüstung (11) für die stetige Versorgung der Stromerzeugermotoren (15), um die kinematische Kette in ihrer Bewegung zu begleiten. Gleichzeitig wartet der Hauptmotor (01) darauf, von den Stromerzeuger-Motoren (15) in der darauf folgenden Phase der Nutzbarmachung der kinetischen Energie. Nach Überschreiten des UT wird die Kupplung (03) abgeschaltet, um die gesamte kinematische Kette vom Schwungrad (02) zu trennen, das frei weiter dreht. In dieser zweiten Phase holen die Stromerzeugermotoren (15) die kinetische Energie zurück durch Bremsen der Massen der kinematischen Kette in Bewegung, die in elektrische Energie verwandelt wird und mittels der elektrischen Ausrüstung (11) auf den Hauptmotor (01) übertragen wird. Während der Bremsphase wird die von den Stromerzeugermotoren (15) erzeugte überschüssige elektrische Energie zum Teil von der elektrischen Ausrüstung (11) gespeichert und der Rest wird in das Netz gegeben. Wenn der Stößel (09) den OT erreicht, schaltet die Bremse (05) ein, deren einzige Aufgabe es ist, die gesamte kinematische Kette sicher zu sperren. Zwischenzeitlich wird der Hauptmotor (01) vom Netz solange gespeist, bis das Schwungrad hochgefahren ist und so die für den nächsten Prellschlag notwendige Energie gespeichert hat..

## Patentansprüche

1. System zur Nutzbarmachung der kinetischen Energie in einer mechanischen Presse, die aus einer kinematischen Kette für das Bewegen eines Stößels (09) besteht, die eine Exzenterwelle (07), eine Kupplung (03), eine Bremse (05) und ein Schwungrad (02) umfasst, **gekennzeichnet dadurch, dass** beim Bremsen dieser Massen in Bewegung bei Verwendung von Stromerzeugermotoren (15) die kinetische Energie in elektrische Energie verwandelt wird.

2. System zur Nutzbarmachung der kinetischen Energie nach Anspruch 1, **gekennzeichnet durch** eine elektrische Ausrüstung (11), die dazu in der Lage ist, die erzeugte elektrische Energie zu speichern, um einen Hauptmotor (01) zu versorgen und die Energie ins Netz zurückzuleiten.

3. System zur Nutzbarmachung der kinetischen Energie nach Anspruch 1, **dadurch gekennzeichnet, dass** die Stromerzeugermotoren (15) auf der Bremsseite (05) befestigt sind.

4. System zur Nutzbarmachung der kinetischen Energie nach Anspruch 3, **dadurch gekennzeichnet, dass** auf den Stromerzeugermotoren (15) Zahnritzel (14) sitzen, die auf einen Zahnkranz (13) eingreifen und einteilig mit der Exzenterwelle (07) verbunden sind.

5. System zur Nutzbarmachung der kinetischen Energie nach Anspruch 1, **dadurch gekennzeichnet, dass** die Stromerzeugermotoren (15) auch als Motoren zur Beschleunigung der Massen in der Anfangsphase des Prellschlags verwendet werden.

6. System zur Nutzbarmachung der kinetischen Energie nach Anspruch 1, **dadurch gekennzeichnet, dass** die Bremse (05) der Presse lediglich als Feststellbremse und bei Störfällen als Sicherhheitsbremse aufrechterhalten wird.
